# EUROPÄISCHE PATENTSCHRIFT

(11) **EP 2 643 115 B1**
(45) Veröffentlichungstag und Bekanntmachung des Hinweises auf die Patenterteilung: **16.03.2016**
(21) Anmeldenummer: 10805766.2
(22) Anmeldetag: 26.11.2010
(51) Int. Cl.: B23B 5/32

(54) **VERFAHREN ZUM REPROFILIEREN VON RADSÄTZEN AUF UNTERFLURRADSATZDREHMASCHINEN**
METHOD FOR REPROFILING WHEELSETS ON UNDERFLOOR WHEEL LATHES
PROCÉDÉ PERMETTANT DE REPROFILER DES ESSIEUX MONTÉS SUR DES TOURS À ESSIEUX MONTÉS EN FOSSE

(43) Veröffentlichungstag der Anmeldung: 02.10.2013
(73) Patentinhaber: Hegenscheidt-MFD GmbH & Co. KG, 41812 Erkelenz (DE)
(72) Erfinder: NAUMANN, Hans, J., 09117 Chemnitz (DE); NIJSSEN, Theo, NL-5954 CJ Beesel (NL); MERTENS, Robert, 52531 Übach-Palenberg (DE); REICHE, Hans-Joachim, 40699 Erkrath (DE)
(74) Vertreter: Patentanwälte Findeisen & Neumann
(86) Internationale Anmeldenummer: PCT/DE2010/001399
(87) Internationale Veröffentlichungsnummer: WO 2012/069027

(56) Entgegenhaltungen:
- EP-A1- 0 619 159
- WO-A2-2007/014972
- DE-A1- 4 003 148
- US-A1- 2008 216 621

## Beschreibung

Die Erfindung betrifft ein Verfahren gemäß dem Oberbegriff des Anspruchs 1 zum Reprofilieren von in Achslagergehäusen an Schienenfahrzeugen drehbar gelagerten Radsätzen auf Unterflurradsatzdrehmaschinen, die spanabhebende Bearbeitungswerkzeuge, eine Maschinensteuerung für die Bearbeitungswerkzeuge, Antriebsrollen, Axialführungsrollen, Messrollen sowie Spannorgane zum Angreifen an den Achslagergehäusen aufweisen.

Ein solches Verfahren ist aus US 2008/0216621 A bekannt.

EP 0 201 619 B1 beschreibt ein Verfahren zur werkstoffsparenden Berichtigung eines Profils eines Schienenrades unter Anwendung eines Zerspanungsprozesses. Dieses bekannte Verfahren, bei dem Bereiche des Profils eine Abweichung von einem Soll-Profil durch Werkstoffverschleiß an Lauffläche und/oder Spurkranz aufweisen, ist dadurch gekennzeichnet, dass Profilbereiche mit einem geringeren Verschleiß ermittelt werden, worauf diese einem Umformvorgang unterworfen werden, wodurch Werkstoff dieser Profilbereiche verdrängt wird und in tiefer liegende Bereiche fließt, um die am stärksten verschlissenen Bereiche mindestens teilweise mit Werkstoff aufzufüllen, bevor die radiale Lage eines berichtigten Profils bestimmt wird, welches durch den Zerspanungsprozess hergestellt wird und gegenüber dem Verschleißprofil radial nach außen versetzt ist. Die Anwendung dieses Verfahrens setzt also voraus, dass der verschlissene Spurkranz einer Umformoperation, zum Beispiel durch Walzen oder Schmieden unterworfen und hierdurch von der Spurkranzkuppenspitze Werkstoff abgetragen wird, so dass die Werkstoffmenge, die an der Spurkranzspitze verdrängt wird und dabei den Spurkranz dicker macht, zur Lauffläche hin verschoben wird. Aus dieser Fundstelle zum Stand der Technik ist für den Fachmann erkennbar, dass das Reprofilieren von Eisenbahnradsätzen nur auf Maschinen durchgeführt werden kann, welche nicht den Unterflurmaschinen zuzurechnen sind. Daher ist keine Möglichkeit ersichtlich, das aus EP 0 201 619 B1 bekannte Verfahren auch auf Unterflurradsatzdrehmaschinen anzuwenden.

Aus DE 10 2006 054 437 A1 ist ein Verfahren zur Reprofilierung eines zu einem Eisenbahnradsatz gehörenden Schienenrades durch spanabhebende Bearbeitung bekannt. Dieses Verfahren ist dadurch gekennzeichnet, dass man in einem ersten, mittleren Bereich zu beiden Seiten der Messkreisebene des Schienenrades das Reprofilieren auf das Beseitigen von Unrundheiten beschränkt, in einem zweiten Bereich, der sich von der Profilaußenkante bis zum mittleren Bereich erstreckt, die Sollkontur wieder herstellt und in einem dritten Bereich, der sich vom mittleren Bereich bis an den Spurkranz erstreckt, das Reprofilieren auf das Entfernen einer oberflächennahen Schicht beschränkt. Obwohl dieses Verfahren schon eher dazu geeignet ist, auch auf Unterflurradsatzdrehmaschinen angewendet zu werden, so ergibt sich aus dieser Lehre gemäß DE 10 2006 054 437 A1 dennoch kein Hinweis, wie man ein hochgenaues Reprofilieren auf einer Unterflurradsatzdrehmaschine vornehmen kann.

Allerdings ist ein hochgenaues Reprofilieren eines Radsatzes die Voraussetzung dafür, dass ein derartiger Radsatz in Hochgeschwindigkeitsfahrzeugen eingesetzt werden kann. Charakteristisch für das Verschleißbild eines Radsatzes beim Einsatz in hohen Geschwindigkeitsbereichen ist, dass im Anfangsstadium Material im Bereich der Messkreisebene ausgewalzt wird und gleichermaßen zur Spurkranzseite und zur Außenseite der Radbandage hin verschoben wird.

Aus dieser Erkenntnis ergibt sich die Aufgabe für die vorliegende Erfindung, ein Verfahren vorzuschlagen, bei dem durch minimale Materialabnahme die Laufleistung der Radsätze wesentlich erhöht werden kann. Insbesondere sollen nach dem zu schaffenden Verfahren die Radsätze von Hochgeschwindigkeitsfahrzeugen reprofiliert werden können. Hierbei soll ein zu reprofilierendes Rad auf einer Unterflurradsatzdrehmaschine mit einem einzigen Schnitt mit einer Spantiefe zwischen 0,1 mm bis 0,2 mm bearbeitet werden. Dabei soll die maximale Abweichung vom Soll-Durchmesser einen Wert von 0,1 mm nicht überschreiten. Das hochgenaue Reprofilieren auf Unterflurradsatzdrehmaschinen soll zugleich die Wirtschaftlichkeit erhöhen, weil der Radsatz nicht aus dem Fahrzeug ausgebaut werden muss, um reprofiliert zu werden.

Erfindungsgemäß wird diese Aufgabe durch den Anspruch 1 gelöst, wobei man
- den Radsatz mit Hilfe der Antriebsrollen der Unterflurradsatzdrehmaschine vom Gleis abhebt und dabei wiegt,
- die Achslagergehäuse zwischen den Antriebsrollen und den Spannorganen fixiert,
- auf der Innenseite von jedem der beiden Räder des Radsatzes eine Axialführungsrolle zur Anlage bringt und in ihrer Stellung fixiert,
- die Antriebsrollen mit einer zusätzlichen Kraft beaufschlagt,
- mit einer Messrolle den Ist-Durchmesser und das Verschleißprofil von jedem Rad feststellt,
- anhand der Messergebnisse den kleineren der Ist-Durchmesser bestimmt und mit einer vorgegebenen Bearbeitungszugabe als Soll-Durchmesser in die Maschinensteuerung für die Bearbeitungswerkzeuge eingibt.

In einer vorteilhaften Ausgestaltung des Verfahrens ist vorgesehen, dass man die zusätzliche Kraft zum Beaufschlagen der Antriebsrollen zwischen 20 KN und 50 KN, vorzugsweise 30 KN für jede Antriebsrolle wählt. Dadurch wird eine besonders steife Einspannung des Radsatzes auf der Unterflurradsatzdrehmaschine erreicht.

Nach einem weiteren vorteilhaften Ausgestaltungsmerkmal ist vorgesehen, dass man die Bearbeitungszugabe zwischen 0,10 mm und 0,25 mm, vorzugsweise mit 0,15 mm wählt. Eine derartige Zustellung ist zweckmäßig, um Oberflächenbeschädigungen des reprofilierten Profils durch feine Rissbildungen zu beseitigen.

Eine Wiederherstellung des Profils erfolgt vorzugsweise mit lediglich einem einzigen Bearbeitungsschnitt. Dabei geht man wie folgt vor:
Von der Außenseite des Rades zur Messkreisebene hin, das heißt, im ersten Drittel des Ist-Profils, wird mit einer Spantiefe zwischen 2 mm und 6 mm, vorzugsweise 4 mm gearbeitet. Im Bereich der Messkreisebene, also im Bereich des Laufkreises des Ist-Profils, wird mit einer Spantiefe zwischen 0,10 mm und 0,25 mm, vorzugsweise 0,15 mm gearbeitet. Danach wird im Bereich der Spurkranzflanke mit einer Spantiefe zwischen 0,0 mm und 4,0 mm, vorzugsweise 2,0 mm gearbeitet. Folglich kann es vorkommen, dass im Bereich der Spurkranzflanke kein Materialabtrag stattfindet. Schließlich wird an der Spurkranzkuppe mit einer Spantiefe zwischen 2,0 mm und 6,0 mm, vorzugsweise 4,0 mm gearbeitet.

Bei derart unterschiedlichen Spantiefen ändern sich auch die passiven Schnittkräfte, die einen Einfluss auf die Steifigkeit der Einspannung und somit auf die Genauigkeit des Soll-Durchmessers des wiederhergestellten Profils haben. In Betracht zu ziehen ist hierbei die "spezifische Schnittkraft". Die spezifische Schnittkraft ist jene Kraft, die zum Spanen eines Werkstoffs mit einem Spanungsquerschnitt von 1 mm² erforderlich ist. Diese Kraft ist von der Zerspanbarkeit des Werkstoffes, der Dicke des abgehobenen Spans, der Schnittgeschwindigkeit und der Schneidengeometrie des spanabhebenden Werkzeugs abhängig. Die spezifische Schnittkraft nimmt bei kleinen Spanungsdicken überproportional zu. Diese Krafterhöhung hat Einfluss auf die Genauigkeit des zu erzeugenden Profils. Es ist also wichtig, für die genaue Bearbeitung des Radprofils, des Durchmessers und des Rundlaufs eine steife Fixierung, das heißt, eine Einspannung, der Radachse vorzunehmen. Zu berücksichtigen ist dabei auch, dass die Radachse bei der Bearbeitung auf der Unterflurradsatzdrehmaschine weiterhin in Achslagergehäusen gelagert bleibt. Das erforderliche Lagerspiel muss infolge dessen derart beherrscht werden, dass es nicht in das Bearbeitungsergebnis mit eingeht. Hierzu dient zunächst die Fixierung der beiden Räder des Radsatzes von der Innenseite her durch eine Axialführungsrolle, welche nach ihrer Anlage auf der Innenseite des Rades in ihrer Arbeitsstellung fixiert wird. Sodann ist vorgesehen, dass die Achslagergehäuse durch Niederhaltung mit Spannpratzen fixiert werden. Die Achslagergehäuse können aber auch durch Unterstützung fixiert werden. Schließlich ist auch vorgesehen, dass man die Achslagergehäuse sowohl durch Niederhaltung als auch durch Unterstützung fixiert.

Durch Anwendung dieses Verfahren wird es möglich, durch eine lediglich minimale Materialabnahme die Laufleistung von Radsätzen wesentlich zu erhöhen. Somit können insbesondere die Radsätze von Hochgeschwindigkeitsfahrzeugen auf wirtschaftliche Weise reprofiliert werden.

Nachfolgend wird die Erfindung an einem Ausführungsbeispiel näher beschrieben. Es zeigen, jeweils in vereinfachter und weitgehend schematischer Darstellung die
- Fig. 1: einen ausgebauten Radsatz in perspektivischer Ansicht in verkleinertem Maßstab
- Fig. 2: einen Querschnitt durch das Verschleißprofil eines Radsatzes
- Fig. 3: eine Variante der Achslagerfixierung durch Niederhaltung in Seitenansicht
- Fig. 4: eine Variante der Achslagerfixierung durch Unterstützung in Seitenansicht
- Fig. 5: eine Variante der Achslagerfixierung durch Unterstützung und Niederhaltung in Seitenansicht

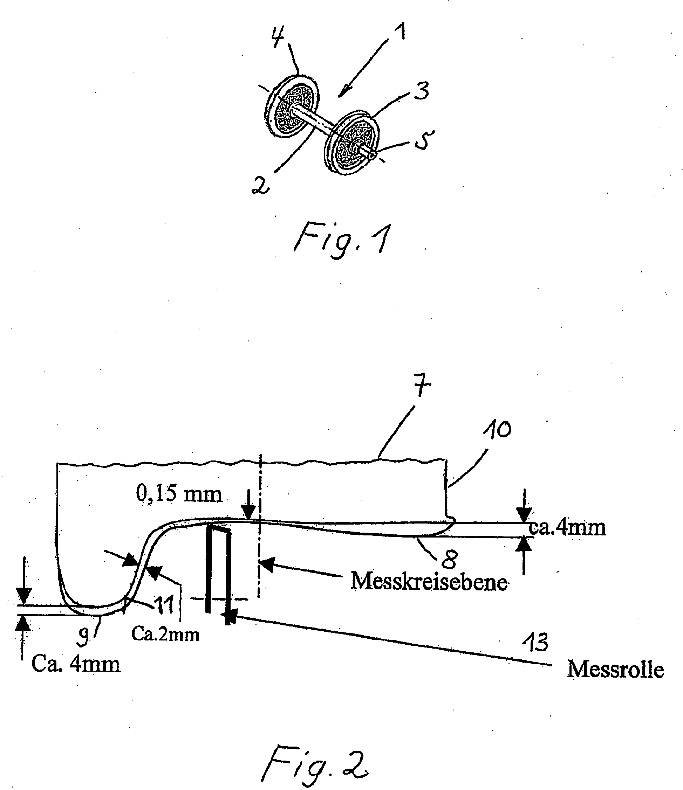

Der in Fig. 1 dargestellte Radsatz 1 besteht aus einer Achswelle 2 und den beiden Radscheiben 3 und 4. Im eingebauten Zustand ist dieser Radsatz 1 mit seinen Achsschenkeln 5 in Achslagergehäusen 6 am Schienenfahrzeug (nicht gezeigt) drehbar gelagert.

Fig. 2 zeigt einen Ausschnitt aus dem Radprofil 7, durch welches die Radscheiben 3 und 4 jeweils auf ihrem Außenumfang begrenzt werden. Dabei wird mit der Linie 8 das Verschleißprofil angedeutet, das sich nach einer bestimmten Laufleistung des Radsatzes 1 einstellt. Dieses Verschleißprofil 8 ist das Ist-Profil und man erkennt, dass aus dem Bereich der Messkreisebene Material ausgewalzt wurde, welches gleichermaßen zur Seite des Spurkranzes 9 wie auch zur Außenseite 10 des Radprofils 7 hin verschoben wurde.

Für die Reprofilierung ist es notwendig, das Ist-Profil 8 zu beseitigen und wieder ein Soll-Profil 11 herzustellen, das den Anforderungen der Reprofilierung vom Radsatz 1 entspricht. Dabei weist die Unterflurradsatzdrehmaschine zur Ermittlung des Ist-Profils 8 eine Messrolle 13 auf, die auch zur Bestätigung des Arbeitsergebnisses durch das wiederhergestellte Soll-Profil 11 genutzt wird. Die von der Messrolle 13 erhaltenen Ergebnisse gehen in die Maschinensteuerung (nicht gezeigt) ein, wobei die Messergebnisse von der linken Radscheibe 4 und der rechten Radscheibe 3 miteinander verglichen werden und sodann der kleinere der beiden Ist-Durchmesser der zwei Radscheiben 3; 4 abzüglich einer Bearbeitungszugabe von beispielsweise 2 x 0,15 mm als Zieldurchmesser eingegeben wird. Diese Zustellung von 0,15 mm ist erforderlich, um Rest-Beschädigungen am Soll-Profil 11 auszuschließen, die sich durch Materialverschiebung in Form von Mini-Rissen bilden können. In Fig. 2 sind jeweils die Spantiefen angegeben, mit denen ausgehend vom Ist-Profil 8 das Soll-Profil 11 wiederhergestellt werden kann.

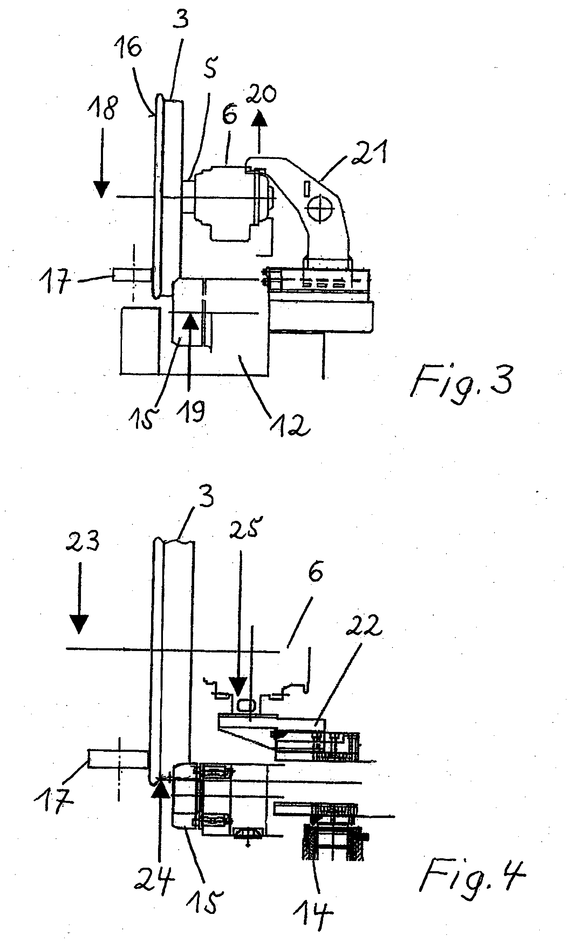

Fig. 3 zeigt eine Ausführung zur Fixierung eines Achslagergehäuses 6 durch eine Niederhaltung. In der Unterflurradsatzdrehmaschine 12 wird die Radscheibe 3 durch zwei Antriebsrollen, von denen nur die eine Antriebsrolle 15 gezeigt ist, von unten her abgestützt. Zugleich wird die Radscheibe 3 auf ihrer Innenseite 16 von einer Axialführungsrolle 17 fixiert. Der mit einem Pfeil stilisierten Radlast 18 steht eine ebenfalls mit einem Pfeil stilisierte Kraft 19 an den Antriebsrollen 15 gegenüber, die sich aus einer Gegenkraft entsprechend der Höhe der Radlast 18 plus einer mit einem weiteren Pfeil stilisierten Zusatzlast 20 zusammensetzt. Die Zusatzlast 20 bewirkt, dass die Spannpratze 21 zur Niederhaltung des Achslagergehäuses 6 auf der Unterflurradsatzdrehmaschine 12 eine Verformung durch Aufbiegung erfährt. Dabei wirkt die Zusatzlast 20 auf die Spannpratze 21 und verformt diese entsprechend ihrer Steifigkeit. Während der Bearbeitung wird die Zusatzlast 20 um die spezifische Schnittkraft erhöht, die bereits weiter oben erläutert worden ist. Im Rahmen der endlichen Steifigkeit des aus Radscheibe 3, Achsschenkel 5, Achslagergehäuse 6, Spannpratze 21, Unterflurradsatzdrehmaschine 12 und Antriebsrollen 15 bestehenden Gesamtsystems wirkt sich die Zusatzlast 20 auf die Bearbeitungsgenauigkeit aus.

Fig. 4 zeigt eine Ausführung zur Fixierung eines Achslagergehäuses 6 durch eine Unterstützung 22. Eine derartige Unterstützung 22 wird beispielsweise angewendet bei Fahrzeugen mit einer ausreichenden Radlast 23 (mit Pfeil stilisiert), die größer ist als ca. 120 KN. Eine mit einem Pfeil stilisierte Lastreduzierung 24 von etwa 20 KN ergibt eine ebenfalls mit Pfeil stilisierte resultierende Kraft 25, die über das Achslagergehäuse 6 auf die Unterstützung 22 der Unterflurradsatzdrehmaschine 14 einwirkt und diese entsprechend ihrer Steifigkeit verformt. Während der Bearbeitung wird die resultierende Kraft 25 um die spezifische Schnittkraft verringert. Im Rahmen der endlichen Steifigkeit dieses Systems wirkt sich auch diese Verringerung auf die Bearbeitungsgenauigkeit aus.

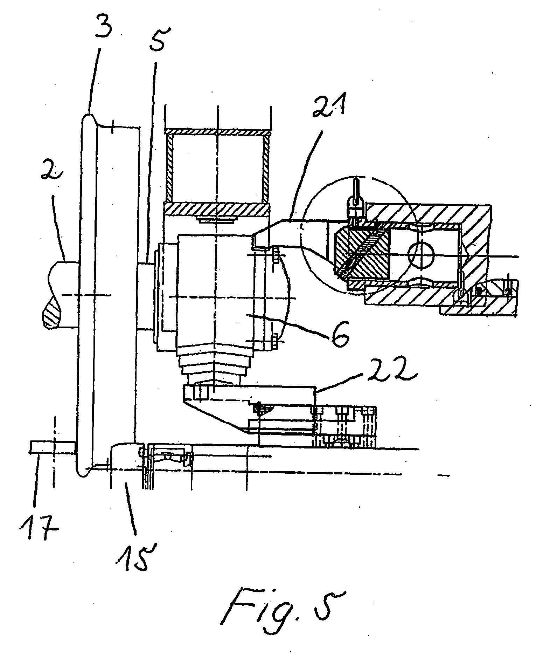

Fig. 5 zeigt eine Ausführung zur Fixierung eines Achslagergehäuses 6 durch eine Niederhaltung mit Spannpratze 21 und durch eine Unterstützung 22. Mit dieser Variante der Einspannung heben sich die negativen Auswirkungen durch die passive Schnittkraft, wie sie im Zusammenhang mit Fig. 3 und Fig. 4 beschrieben wurden, auf. Demzufolge handelt es sich hier um die optimale Einspannung für ein sparsames Reprofilieren von Eisenbahnradsätzen 1 mit einem einzigen Schnitt.

### Bezugszeichenliste

- 1: Radsatz
- 2: Achswelle
- 3: Radscheibe
- 4: Radscheibe
- 5: Achsschenkel
- 6: Achslagergehäuse
- 7: Radprofil
- 8: Ist-Profil (Verschleißprofil)
- 9: Spurkranz
- 10: Außenseite
- 11: Soll-Profil (Reprofilierungsprofil)
- 12: Unterflurradsatzdrehmaschine
- 13: Messrolle
- 14: Unterflurradsatzdrehmaschine
- 15: Antriebsrolle
- 16: Innenseite
- 17: Axialführungsrolle
- 18: Radlast
- 19: Radlast und Zusatzlast
- 20: Zusatzlast
- 21: Spannpratze
- 22: Unterstützung
- 23: Radlast
- 24: Radlast - Reduzierung
- 25: resultierende Kraft

## Patentansprüche

1. Verfahren zum Reprofilieren von in Achslagergehäusen (6) an Schienenfahrzeugen drehbar gelagerten Radsätzen (1) auf Unterflurradsatzdrehmaschinen (12; 14), die spanabhebende Bearbeitungswerkzeuge, eine Maschinensteuerung für die Bearbeitungswerkzeuge, Antriebsrollen (15), Axialführungsrollen (17), Messrollen (13) sowie Spannorgane (21; 22) zum Angreifen an den Achslagergehäusen (6) aufweisen, wobei man
- den Radsatz (1) mit Hilfe der Antriebsrollen (15) vom Gleis abhebt und dabei wiegt,
- die Achslagergehäuse (6) zwischen den Antriebsrollen (15) und den Spannorganen (21; 22) fixiert,
- auf der Innenseite (16) von jedem der beiden Räder (3; 4) des Radsatzes (1) eine Axialführungsrolle (17) zur Anlage bringt und in ihrer Stellung fixiert,
**dadurch gekennzeichnet, dass**
- die Antriebsrollen (15) mit einer zusätzlichen Kraft (20) beaufschlagt,
- mit einer Messrolle (13) den Ist-Durchmesser (8) und das Verschleißprofil von jedem Rad (3; 4) feststellt,
- anhand der Messergebnisse den kleineren der Ist-Durchmesser (8) bestimmt und mit einer vorgegebenen Bearbeitungszugabe als Soll-Durchmesser (11) in die Maschinensteuerung für die Bearbeitungswerkzeuge eingibt.

2. Verfahren nach Anspruch 1, **dadurch gekennzeichnet,**
**dass** man die zusätzliche Kraft (20) zum Beaufschlagen der Antriebsrollen (15) zwischen 20 KN und 50 KN, vorzugsweise 30 KN, für jede Antriebsrolle (15) wählt.

3. Verfahren nach Anspruch 1, **dadurch gekennzeichnet,**
**dass** man die Bearbeitungszugabe zwischen 0,10 mm und 0,25 mm, vorzugsweise 0,15 mm, wählt.

4. Verfahren nach Anspruch 1, **dadurch gekennzeichnet,**
**dass** man, ausgehend von der Messkreisebene jedes Rades (3; 4), von der Außenseite (10) des Rades (3; 4) zur Messkreisebene hin im ersten Drittel des Ist-Profils (8) mit einer Spantiefe zwischen 2 mm und 6 mm, vorzugsweise 4 mm, arbeitet.

5. Verfahren nach Anspruch 4, **dadurch gekennzeichnet,**
**dass** man im Bereich der Messkreisebene, also im Laufkreis des Ist-Profils (8), mit einer Spantiefe zwischen 0,10 mm und 0,25 mm, vorzugsweise 0,15 mm, arbeitet.

6. Verfahren nach Anspruch 4, **dadurch gekennzeichnet,**
**dass** man im Bereich der Spurkranzflanke (9) mit einer Spantiefe zwischen 0,0 mm und 4,0 mm, vorzugsweise 2,0 mm, arbeitet.

7. Verfahren nach Anspruch 4, **dadurch gekennzeichnet,**
**dass** man an der Spurkranzkuppe (9) mit einer Spantiefe zwischen 2,0 mm und 6,0 mm, vorzugsweise 4,0 mm, arbeitet.

8. Verfahren nach Anspruch 4, **dadurch gekennzeichnet,**
**dass** man mit einem einzigen Bearbeitungsschnitt reprofiliert.

9. Verfahren nach Anspruch 1, **dadurch gekennzeichnet,**
**dass** man die Achslagergehäuse (6) durch Niederhaltung mit Spannpratzen (21) fixiert.

10. Verfahren nach Anspruch 1, **dadurch gekennzeichnet,**
**dass** man die Achslagergehäuse (6) durch Unterstützung (22) fixiert.

11. Verfahren nach Anspruch 1, **dadurch gekennzeichnet,**
**dass** man die Achslagergehäuse (6) durch Niederhaltung (21) und Unterstützung (22) fixiert.

## Claims

1. Method for reprofiling wheelsets (1) rotatably mounted in axle bearing housings (6) on rail vehicles on underfloor wheelset lathes (12; 14) equipped with machining tools, a machine control for the machining tools, drive rollers (15), axial guide rollers (17), measuring rollers (13) as well as clamping devices (21; 22) to engage the axle bearing housings (6), whereby the wheelset (1) is lifted off the rail using the drive rollers (15), weighing it in the process, the axle bearing housings (6) are fixed between the drive rollers (15) and the clamping devices (21; 22), an axial guide roller (17) is adjusted to touch the inner side (16) of each of the two wheels (3; 4) of the wheelset (1) and fixed in this position, **characterised in that**
- an additional force (20) is applied to the drive rollers (15),
- the actual diameter (8) and the wear profile of
each wheel (3; 4) is determined by means of a measuring roller (13),
- the smaller actual diameter (8) is determined based on the measurement results and,
with a specified machining allowance, is entered as the nominal diameter (11) into the machine control for the machining tools.

2. Method in accordance with Claim 1, **characterised in that**
the additional force (20) to act on the drive rollers (15) is selected between 20 kN and 50 kN, preferably 30 kN, for each drive roller (15).

3. Method in accordance with Claim 1, **characterised in that**
the machining allowance is selected between 0.10 mm and 0.25 mm, preferably 0.15 mm.

4. Method in accordance with Claim 1, **characterised in that**
the processing is done starting from the taping line of each wheel (3; 4) from the outer side (10) of the wheel (3; 4) towards the taping line in the first third of the actual profile (8) with a cutting depth of between 2 mm and 6 mm, preferably 4 mm.

5. Method in accordance with Claim 4, **characterised in that**
the processing is carried out in the area of the taping line, that is, in the running tread of the actual profile (8), with a cutting depth of between 0.10 mm and 0.25 mm, preferably 0.15 mm.

6. Method in accordance with Claim 4, **characterised in that**
in the area of wheel flange flank (9), the machining is carried out with a cutting depth of between 0.0 mm and 4.0 mm, preferably 2.0 mm.

7. Method in accordance with Claim 4, **characterised in that**
machining on the wheel flange dome (9) is carried out with a cutting depth of between 2.0 mm and 6.0 mm, preferably 4.0 mm.

8. Method in accordance with Claim 4, **characterised in that**
reprofiling is carried out with a single machining step.

9. Method in accordance with Claim 1, **characterised in that**
the axle bearing housings (6) are fixed by holding down by means of clamping lugs (21).

10. Method in accordance with Claim 1, **characterised in that**
the axle bearing housings (6) are fixed by means of a support (22).

11. Method in accordance with Claim 1, **characterised in that**
the axle bearing housings (6) are fixed by means of a clamping lug (21) and support (22).

## Revendications

1. Procédé permettant de reprofiler sur des tours à trains de roues en fosse (12, 14) des essieux montés de manière mobiles dans des carters d'essieu (6) sur des véhicules ferroviaires (1), équipés d'outils d'usinage à enlèvement de copeaux, d'une commande machine pour les outils d'usinage, de galets d'entraînement (15), de galets de guidages axiaux (17), de rouleaux de mesure (13) et d'organes de serrage (21, 22) pour l'entrée en prise sur les carters d'essieu (6), l'essieu monté (1) étant soulevé au-dessus du rail à l'aide des galets d'entraînement (15) et pesé lors de cette opération, les carters d'essieu (6) étant fixés entre les galets d'entraînement (15) et les organes de serrage (21, 22), et un galet de guidage axial (17) étant amené au contact du côté intérieur (16) de chacune des deux roues (3, 4) de l'essieu monté (1) et fixé dans cette position, **caractérisé par le fait que**
- une pression supplémentaire (20) est appliquée sur les galets d'entraînement (15),
- à l'aide d'un rouleau de mesure (13), le diamètre réel (8) et le profil d'usure de chaque roue (3, 4) sont déterminés,
- le plus faible des diamètres réels (8) est déterminé en fonction des résultats de mesure et
une surépaisseur d'usinage prédéfinie est entrée comme diamètre de consigne (11) dans la commande de la machine pour les outils d'usinage.

2. Procédé selon la revendication 1, **caractérisé par le fait que**
une force (20) d'application des galets d'entraînement (15) supplémentaire est choisie entre 20 KN et 50 KN, de préférence 30 KN, pour chaque galet d'entraînement (15).

3. Procédé selon la revendication 1, **caractérisé par le fait que**
la surépaisseur d'usinage choisie se situe entre 0,10 mm et 0,25 mm, de préférence 0,15 mm.

4. Procédé selon la revendication 1, **caractérisé par le fait que**
le travail est réalisé dans le premier tiers du profil réel (8) à partir du niveau du cercle de mesure de chaque roue (3, 4), du côté extérieur (10) de la roue (3, 4) jusqu'au niveau du cercle de mesure, avec une profondeur de coupe entre 2 mm et 6 mm, de préférence 4 mm.

5. Procédé selon la revendication 4, **caractérisé par le fait que**
le travail est effectué dans la zone du niveau du cercle de mesure, donc dans le cercle de roulement du profil réel (8), avec une profondeur de coupe comprise entre 0,10 mm et 0,25 mm, de préférence 0,15 mm.

6. Procédé selon la revendication 4, **caractérisé par le fait que**
le travail est effectué dans la zone du flanc de boudin (9) avec une profondeur de coupe comprise entre 0 mm et 4 mm, de préférence 2 mm.

7. Procédé selon la revendication 4, **caractérisé par le fait que**
le travail est effectué sur le haut du boudin (9) avec une profondeur de coupe comprise entre 2 mm et 6 mm, de préférence 4 mm.

8. Procédé selon la revendication 4, **caractérisé par le fait que**
le reprofilage est réalisé en une seule étape d'usinage.

9. Procédé selon la revendication 1, **caractérisé par le fait que**
le carter d'essieu (6) est fixé par un serre-flanc avec des griffes de serrage (21).

10. Procédé selon la revendication 1, **caractérisé par le fait que**
le carter d'essieu (6) est fixé par un soutien (22).

11. Procédé selon la revendication 1, **caractérisé par le fait que**
le carter d'essieu (6) est fixé par un serre-flanc (21) et un soutien (22)
